# EUROPÄISCHE PATENTSCHRIFT

(11) **EP 1 406 950 B1**
(45) Veröffentlichungstag und Bekanntmachung des Hinweises auf die Patenterteilung: **16.02.2005**
(21) Anmeldenummer: 02750990.0
(22) Anmeldetag: 29.05.2002
(51) Int. Cl.: C08G 77/54, C08L 83/14

(54) **ÜBER ALKOXYGRUPPEN VERNETZENDE RTV-1-SILICONKAUTSCHUK-MISCHUNGEN**
RTV-1-SILICONE-RUBBER BLENDS WHICH CROSS-LINK BY MEANS OF ALKOXY GROUPS
MELANGES DE CAOUTCHOUC DE SILICONE RTV-1 A RETICULATION PAR GROUPES ALKOXY

(30) Priorität: 17.07.2001 DE 10134634
(43) Veröffentlichungstag der Anmeldung: 14.04.2004
(73) Patentinhaber: Consortium für elektrochemische Industrie GmbH, 81379 München (DE)
(72) Erfinder: SCHINDLER, Wolfram, 84577 Tüssling (DE); SCHEIM, Uwe, 01640 Coswig (DE); PACHALY, Bernd, 84561 Mehring/Öd (DE)
(74) Vertreter: Fritz, Helmut, Dr.
(86) Internationale Anmeldenummer: PCT/EP2002/005922
(87) Internationale Veröffentlichungsnummer: WO 2003/008485

(56) Entgegenhaltungen:
- US-A- 3 146 250
- US-A- 5 254 657

## Beschreibung

Die Erfindung betrifft unter Abspaltung von Alkoholen aus Alkoxysilylendgruppen zu Elastomeren vernetzbare Massen.

Unter Ausschluss von Wasser lagerfähige, bei Zutritt von Wasser bei Raumtemperatur zu Elastomeren vulkanisierende Einkomponenten-Siliconkautschukmischungen (RTV-1) sind bekannt. Sie enthalten im allgemeinen ein polymeres, meist lineares Siloxan, eine vernetzend wirkende Verbindung, die leicht hydrolysierbare Gruppen enthalten muss, einen Weichmacher, der meist ein methylterminiertes Polydimethylsiloxan ist, und ggf. weitere Zusätze wie Härtungskatalysatoren, Pigmente, Verarbeitungshilfsmittel und Füllstoffe. Die Vulkanisation der Mischungen kann sauer, z.B. bei Anwesenheit von Acetoxysilanen, basisch, z.B. mittels Aminosilanen, oder neutral, z.B. durch Verbindungen, die Oximo- oder Alkoxygruppen aufweisen, erfolgen. Neutral vernetzende RTV-1-Systeme werden vor allem dann benötigt, wenn die bei der Aushärtung der Mischung entstehenden Spaltprodukte den Untergrund nicht beeinflussen sollen, beispielsweise beim Verfugen von Beton oder metallischen Werkstoffen. Aufgrund des unangenehmen Geruchs der Spaltprodukte in den Acetoxy- und Amin-Massen werden für viele Anwendungen neutral vernetzende Systeme bevorzugt. Dabei werden die Oxim-Massen aufgrund der Toxikologie der Spaltprodukte in zunehmendem Maße durch die entsprechenden Alkoxy-Massen ersetzt.

Für die Formulierung von RTV-1-Massen wird im allgemeinen ein Polymer mit OH-Endgruppen eingesetzt. Der Umsetzung der Vernetzerbausteine mit dem OH-Polymer, im Falle der Alkoxy-Massen werden hierzu Trialkoxyorganosilane verwendet, kann während der Compoundierung mit dem Weichmacher und den weiteren Füllstoffen erfolgen. Da diese Massen meist schwierig herzustellen sind und hinsichtlich der Rezepturen eingeschränkt sind (meist keine transparenten Massen möglich), werden in der Regel bereits vorher mit Alkoxyendgruppen endblockierte Polymere verwendet. Ihre Herstellung ist beispielsweise aus EP-B-559 045 bekannt und erfolgt im allgemeinen durch Umsetzung eines hydroxyterminierten Polydiorganosiloxanes einer bestimmten Viskosität mit Alkoxysilanen in Gegenwart von Katalysatoren. Während der dabei stattfindenden Kondensation (Abspaltung von Alkohol) wird das gewünschte Polymer gebildet. An die Herstellung des alkoxyendterminierten Polymers schließt sich dann die Mischungsherstellung an, die jetzt wie oben beschrieben erfolgen kann. Nachteilig ist jedoch bei allen bisher beschriebenen Verfahren, dass nur bei Verwendung von Methoxysilanen ein ausreichender Umsetzungsgrad der OH-Endgruppenpolymere erreicht wird. Verwendet man die bisher bekannten Ethoxysilane zur Herstellung der Polymere ist die Umsetzung der OH-Gruppen unvollständig. Deshalb kann es bereits beim Herstellen der RTV-1-Mischungen oder bei der Lagerung der fertigen Mischungen zur Aushärtung der Massen kommen, d.h. die erhaltenen Produkte sind nicht ausreichend lagerstabil.

Eine weitere Möglichkeit alkoxyvernetzende Polymere herzustellen ist die Umsetzung von funktionalisierten Polydiorganosiloxanen mit einem organofunktionellen Alkoxysilan, welches eine Funktionalität hat, die mit der des Polydiorganosiloxanes zur Reaktion gebracht werden kann. Typische Endgruppen von derartigen Polymeren können lineare, verzweigte oder gegebenenfalls substituierte Hydroxyalkyl-, Aminoalkyl- oder Mercaptoalkylgruppen sein. Geeignete Funktionalitäten an organofunktionellen Alkoxysilanen, ebenfalls mit linearen, verzweigten oder gegebenenfalls substituierten divalenten Alkylgruppen, sind Isocyanat-, Epoxy-, Alkenyl- oder Anhydridgruppen. Bevorzugt sind dabei Hydroxy-und Aminoalkylpolydiorganosiloxane, die ebenfalls bevorzugt mit Isocyanatoalkylsilanen in einer einfachen und quantitativen Reaktion umgesetzt werden können.

In EP-A-625 176 werden feuchtigkeitshärtende Polymere für Anwendungen in Antihaftbeschichtungen beschrieben. Die Herstellung der Polymere erfolgt dabei durch Umsetzung von α,ω-Aminoalkylpolydimethylsiloxanen mit einem Isocyanatoalkyltrialkoxysilan. Die Aminoalkylpolydimethylsiloxane werden durch Äquilibrierung von Octamethylcyclotetrasiloxan mit Bis-(3-aminopropyl)-tetramethyldisiloxan hergestellt. In US-A-5,254,657 werden entsprechende Verbindungen auch zur Anwendung in RTV-1-Massen beschrieben. Auch hierbei werden die Massen durch Umsetzung eines Isocyanatoalkylalkoxysilans mit Aminoalkyl-funktionellen Polydimethylsiloxanen hergestellt. Die Aminoalkylpolydimethylsiloxane werden ebenso als Äquilibrate eingesetzt. Nachteilig an den beschriebenen Verfahren ist, dass bei Äquilibrierungen zur Herstellung von Aminoalkylpolydiorganosiloxanen in der Regel sehr lange Reaktionszeiten (über 10 Stunden) benötigen werden und meist keine einheitlichen Polymere erhalten werden. Dabei bleibt meist ein Teil der Cyclosiloxane unumgesetzt, ferner wird ein Teil des zugesetzten Bis-(3-aminopropyl)-tetramethyldisiloxan nicht in das Polymer eingebaut. Die erhaltenen Polymere haben daher ein uneinheitliche und breite Molekulargewichtsverteilung. Der hohe Restanteil von 10 - 20 % Octamethylcyclotetrasiloxan im Äquilibrat muss in der Regel aufwendig im Vakuum entfernt werden. In US-A-5,254,657 wird zwar auf diese Aufreinigung verzichtet, dies ist aber in Hinblick auf die mechanischen Endeigenschaften derartiger Massen und das Ausschwitzen von niedermolekularen Bestandteilen nach der Applikation problematisch.
Letztlich muss auch noch der Katalysator im Äquilibrat ausreichend desaktiviert werden, um eine vorzeitige Vulkanisation der Polymere beispielsweise bei der Einarbeitung von Füllstoffen der Massen zu verhindern. Aufgrund der drastischen Reaktionsbedingungen bei der Äquilibrierung und der Desaktivierung des Katalysators (erfolgt meist durch Hochheizen des Polymers) haben derartige Massen meist einen aminartigen Geruch und auch noch eine gelbe Färbung.

In US-A-3,146,250 ist ein weiteres, bislang technisch nicht angewendetes Verfahren zur Herstellung von Aminoalkylpolydimethylsiloxanen beschrieben, welches von speziellen cyclischen Silanen der allgemeinen Formel (1) ausgeht, welche mit HO-Si-Gruppen am Ende einer Siliconkette reagieren können. 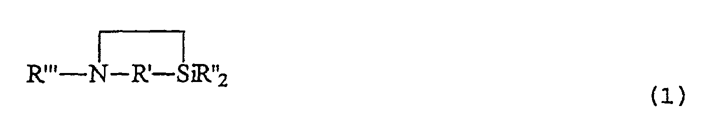 Dabei ist R' eine Kohlenstoffkette mit mindestens 3 und maximal 6 Kohlenstoffatomen, R'' ist ein Kohlenwasserstoffrest und der Rest R''' am Stickstoff ist entweder Wasserstoff, ein Kohlenwasserstoffrest oder ein Organosilylrest der allgemeinen Formel (Halogen-R''''-)Y2Si-, wobei Y und R'''' für Kohlenwasserstoffreste stehen. Ist der Rest R''' Wasserstoff, so erhält man ein unsubstituiertes cyclisches Silazan, welches zur Funktionalisierung von Hydroxy-terminierten Silanolen eingesetzt werden kann. Der Nachteil dieser unsubstituierten cyclischen Silazane ist jedoch, daß diese nur in sehr schlechten Ausbeuten oder von teuren Edukten ausgehend synthetisiert werden können. Dabei wird in den Synthesen häufig das sehr toxische Allylamin eingesetzt, dessen Gebrauch besonders strengen Sicherheitsbedingungen unterliegt. Interessanter ist die Synthese von N-substituierten Silazanen, welche sich häufig mit besseren Ausbeuten herstellen lassen. Setzt man jedoch das in US 3,146,250 beschriebene N-Silyl substituierte Silazan ein, so erhält man bei der Reaktion mit hydroxy-terminierten Siloxanen unerwünschte Nebenprodukte wie in folgendem Formelschema aufgeführt:

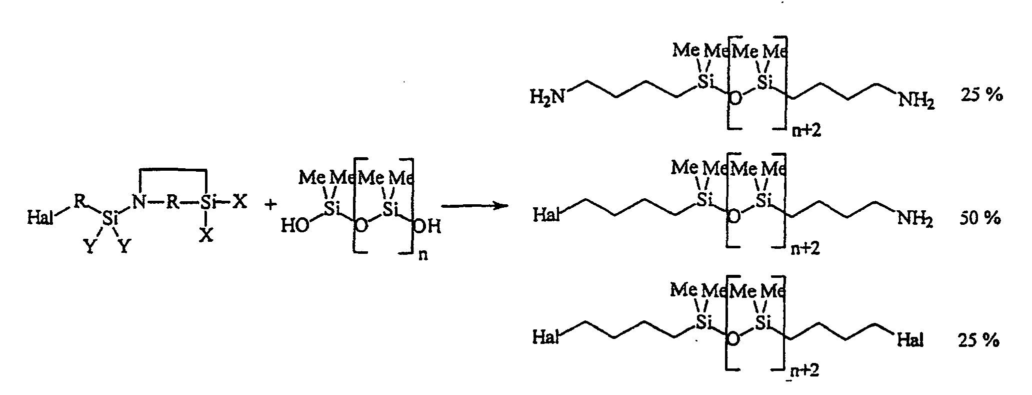

Y und X stehen dabei z.B. für Methyl und R steht für Propyl, Hal steht für Halogen und ist z.B. Chlor. Die jeweiligen Anteile der Edukte ergeben sich aus einfachen Wahrscheinlichkeitsrechnungen.

Setzt man die in DE-A-3546376 beschriebenen N-substituierten Silazane der allgemeinen Formel (2) 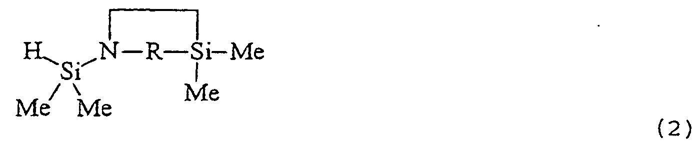 ein, wobei R z.B für eine Propyl-Gruppe steht, so erhält man ebenfalls nicht erwünschte Nebenprodukte in erheblichen Mengen, analog zu der oben beschriebenen Reaktion (siehe vorstehendes Formelschema).

Gegenstand der Erfindung ist ein Verfahren zur Herstellung von unter Abspaltung von Alkoholen aus Alkoxysilylendgruppen zu Elastomeren vernetzbare Massen, bei welchem Polydiorganosiloxan (A) der allgemeinen Formel (3) 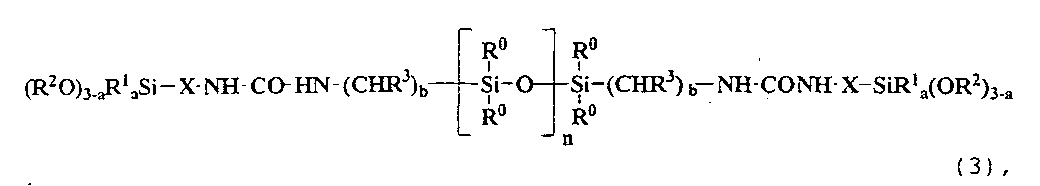 eingesetzt wird, wobei das Polydiorganosiloxan (A) durch Umsetzung eines Polydiorganosiloxans der allgemeinen Formel (4), 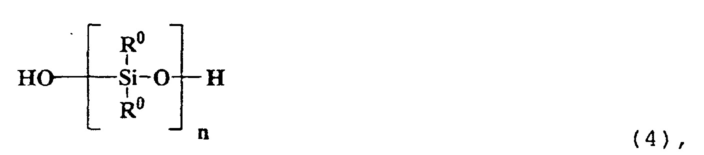 mit einem Silazan der allgemeinen Formel (5), 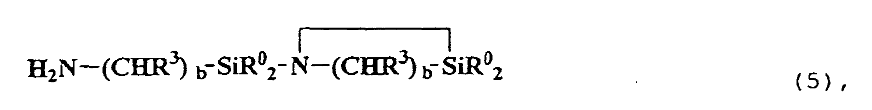 und einem Silan der allgemeinen Formel (6),

**OCN-X-SiR**^{**1**} _{**a**}**(OR**^{**2**} **)**_{**3-a**} (6),

hergestellt wird, worin
- **R**⁰: einen einwertigen, gegebenenfalls mit Fluor-, Chlor-, Brom-, C₁-C₄-Alkoxyalkyl- oder Cyanogruppen substituierten C₁-C₂₀-Kohlenwasserstoffrest,
- **R**¹, **R**²: einen einwertigen, gegebenenfalls mit Fluor-, Chlor-, Brom- oder Cyanogruppen substituierten C₁-C₆- Alkylrest,
- **R**³: Wasserstoff oder einen einwertigen, gegebenenfalls mit Fluor-, Chlor-, Brom-, C₁-C₄-Alkoxyalkyl- oder Cyanogruppen substituierten C₁-C₂₀-Kohlenwasserstoffrest oder Acylrest,
- **X**: eine gegebenenfalls mit Fluor-, Chlor-, Brom-, C₁-C₄-Alkoxyalkyl- oder Cyanogruppen substituierte Alkylengruppe mit 1-10 Kohlenstoffatomen, die durch Ether-, Ester- oder Amin-Gruppen unterbrochen sein kann,
- **a**: die Werte 0, 1 oder 2,
- **b**: ganzzahlige Werte von 3 bis 15 und
- **n**: ganzzahlige Werte von 10 bis 10⁴ bedeuten.

Die bei der Herstellung von Polydiorganosiloxan (A) eingesetzten cyclischen Silazane der allgemeinen Formel (5) können einfach und in hohen Ausbeuten nach dem im Folgendem beschriebenen Verfahren hergestellt werden.
Es hat sich gezeigt, dass dieser Herstellungsweg von Polydiorganosiloxan (A) sich für eine Verwendung in den vorliegenden RTV-1-Massen besonders eignet. Die daraus hergestellten Massen besitzen ein ausgezeichnetes Eigenschaftsprofil und zeigen neben einer variabel einstellbaren Reaktivität sehr gute mechanische Eigenschaften, hervorragende Haftung auf verschiedenen Untergründen und sehr gute Witterungstabilitäten. Auch sind die Massen besonders geruchsarm und farblos.

Das Silazan der allgemeinen Formel (5) kann hergestellt werden durch ein Verfahren, bei dem Halogenalkyldialkylchlorsilane der allgemeinen Formel (7)

X'-(CHR³)_{b}-Si(X')R⁰ ₂ (7)

oder ein Bishalogenalkyltetraalkyldisilazan der allgemeinen Formel (8)

X'-(CHR³)_{b}-SiR⁰ ₂-N(R³)-SiR₂(CHR³)_{b}-X' (8)

oder ein Gemisch aus Verbindungen der allgemeinen Formeln (7) und (8), bei denen
**X'** Cl, Br, oder I bedeuten und
**R**³ und **R** die vorstehenden Bedeutungen aufweisen,
mit Ammoniak, vorzugsweise unter Druck umgesetzt werden.

Bei den hydroxyfunktionellen Polydiorganosiloxanen der allgemeinen Formel (4) bedeutet n vorzugsweise ganzzahlige Werte von 100 bis 2000, insbesondere von 500 bis 1200.

Bei den cyclischen Silazanen der allgemeinen Formel (5) bedeutet **b** vorzugsweise die Werte 3, 4, 5 oder 6, insbesondere 3. Vorzugsweise ist R³ Wasserstoff. Besonders bevorzugt als Silazan der allgemeinen Formel (5) ist N-((3-Aminopropyl)-dimethylsilyl)-2,2-dimethyl-1-aza-2-silacyclopentan.

Bei dem Isocyanatosilan der allgemeinen Formel (6) bedeuten vorzugsweise **X** Methylen oder Propylen, **R**^{**1**} Methyl, **R**^{**2**} Methyl oder Ethyl und **a** 0 oder 1.
Bevorzugte Silane der allgemeinen Formel (6) sind Isocyanatopropyltriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan.

Bevorzugt bedeutet **R**^{**0**} in den allgemeinen Formeln (3) bis (6) Methyl, Ethyl, Phenyl, Vinyl oder Trifluorpropyl, insbesondere Methyl.

Bevorzugt wird das Polydiorganosiloxan (A) in zwei Schritten hergestellt. Im ersten Schritt wird das Polydiorganosiloxan der allgemeinen Formel (4) mit dem Silazan der allgemeinen Formel (5) zu Aminoalkylpolydiorganosiloxan der allgemeinen Formel (9)

**H**_{**2**}**N-(CHR**^{**3**}**)**_{**b**}**-[SiR**^{**0**} _{**2**}**O]**_{**n**}**SiR**^{**0**} _{**2**}**-(CHR**^{**3**}**)**_{**b**}**-NH**_{**2**} (9),

umgesetzt, in der **R**^{**0**}**, R**^{**3**}**, b** und **n** die vorstehenden Bedeutungen aufweisen. Das Silazan reagiert auch ohne die Entstehung von Nebenprodukten mit hydroxyfunktionellen Polydiorganosiloxanen der allgemeinen Formel (4), ohne die Verwendung von Katalysatoren.
Bei der Herstellung der Aminoalkylpolydiorganosiloxane ist die Menge des verwendeten Silazans der allgemeinen Formel (5) abhängig von der Menge der zu funktionalisierenden Silanol-Gruppen. Will man jedoch eine vollständige Funktionalisierung der OH-Gruppen eines Polydiorganosiloxans der allgemeinen Formel (4) erreichen, so ist das Silazan in mindestens äquimolaren Mengen zuzugeben. Verwendet man das cyclische Silazan im Überschuß, so kann das nicht abreagierte Silazan im Anschluß entweder abdestilliert oder hydrolysiert (beispielsweise durch Zusatz von Methanol, aber auch Wasser) werden.

Bevorzugt wird der vorstehende erste Schritt bei 0 °C bis 140 °C, besonders bevorzugt bei mindestens 20 °C bis höchstens 100 °C durchgeführt.

Im zweiten Schritt wird das Aminoalkylpolydiorganosiloxan der allgemeinen Formel (9) mit Isocyanatosilan der allgemeinen Formel (6) zum Polydiorganosiloxan der allgemeinen Formel (3) umgesetzt.

Die Isocyanatosilane werden entweder einzeln, aber auch als Mischung unterschiedlicher Silane eingesetzt. Dabei ist die Wahl des Silans abhängig von den gewünschten Endeigenschaften der RTV-1-Massen. Damit können sowohl die Reaktivität als auch die elastischen Eigenschaften verändert werden. Die entsprechenden Methoxysilane sind reaktiver als die Ethoxysilane. Die difunktionellen Silane ergeben in der Regel niedermoduligere Massen als die trifunktionellen Silane.

Im zweiten Schritt werden vergleichbare Bedingungen wie im ersten Schritt, bevorzugt gleiche Temperatur angewendet.

Die unter Abspaltung von Alkoholen aus Alkoxysilylendgruppen zu Elastomeren vernetzbaren Massen enthalten vorzugsweise neben Polydiorganosiloxan (A) einen Vernetzungskatalysator (B), um eine höhere Vernetzungsgeschwindigkeit zu erreichen. Mengen von 0,01 bis 5 Gew.%, bezogen auf die Gesamtmasse sind bevorzugt. Geeignete Vernetzungskatalysatoren (B) sind organische Zinn- oder Titanverbindungen, bevorzugt Dialkylzinnverbindungen, wie z.B. Dibutylzinndilaurat oder -diacetat, bzw. Titanverbindungen, wie Tetrabutyl oder Tetraisopropyltitanat oder Titanchelate. Es können auch Katalysatorgemische eingesetzt werden.

Die unter Abspaltung von Alkoholen aus Alkoxysilylendgruppen zu Elastomeren vernetzbaren Massen können noch weitere Zusätze (C), wie Füllstoffe, Weichmacher, Haftvermittler oder Pigmente enthalten.

Geeignete weitere Zusätze (C) der RTV-1-Mischung sind:
- bis zu 40 Gew.% Weichmacher, bevorzugt trimethylsilylterminierte Polydimethylsiloxane mit Viskositäten von 0,05 bis 10 Pas. Besonders bevorzugt sind Viskositäten von 0,1 bis 1 Pas. Es können jedoch auch methylterminierte Polydimethylsiloxane eingesetzt werden, bei denen einige der Methylgruppen durch andere organische Gruppen wie beispielsweise Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die einige Verzweigungsstellen enthalten, die dadurch entstehen, dass in der zur Herstellung der Weichmacher dienenden Ausgangsprodukte kleine Mengen tri- oder tetrafunktioneller Silane enthalten sind. Es ist aber auch möglich anstatt der Siloxane, bis zu 25 Gew.% bezogen auf die Gesamtmasse andere organische Verbindungen, wie z.B. bestimmte aromatenfreie Kohlenwasserstoffe, als Weichmacher einzusetzen.
- Bis zu 30 Gew.% verstärkende Füllstoffe und/oder bis zu 60 Gew.% nichtverstärkende Füllstoffe zur Erzielung bestimmter mechanischer Eigenschaften. Bevorzugte Füllstoffe mit hoher spezifischer Oberfläche sind pyrogene Kieselsäure oder gefälltes Calciumcarbonat. Darüber hinaus können Füllstoffe mit geringer spezifischer Oberfläche als Extender verwendet werden. Bevorzugt ist hierbei gemahlenes Calciumcarbonat.
- Bis zu 5 Gew.% Haftvermittler, vorzugsweise mit funktionellen Gruppen substituierte Alkoxysilane. Besonders bevorzugt sind 3-Aminopropyltriethoxysilan, 3-(2-Aminoethyl)-aminopropyltriethoxysilan und 3-Mercaptopropyltriethyoxysilan. Es ist auch möglich ein Gemisch von mit funktionellen Gruppen substituierten Alkoxysilanen einzusetzen.
- Weitere Zusätze, in Abhängigkeit vom Verwendungszweck der RTV-1-Masse können beispielweise sein: Farbpigmente, Fungizide (jeweils bis zu 2 Gew.%).

Die vernetzbaren Massen können beispielsweise als Kleb- und Dichtstoffe eingesetzt werden.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Beispiel 1:

500 g α,ω-Dihydroxypolydimethylsiloxan mit einem mittleren Molekulargewicht von 15 000 g/mol werden in einem beheizbaren mit Vakuumpumpe versehenen Laborplanetenmischer auf 80 °C erwärmt und 0,5 h im Vakuum aufgeheizt. Bei 80 °C werden 9,20 g N-((3-Aminopropyl)-dimethylsilyl)-2,2-dimethyl-1-aza-2-silacyclopentan zugegeben und unter kräftiger Rührung (Butterfly-Rührwerkzeuge, 300 min⁻¹) innerhalb von 1,0 h umgesetzt. Mittels ¹H-NMR wird die Umsetzung des N-((3-Aminopropyl)-dimethylsilyl)-2,2-dimethyl-1-aza-2-silacyclopentan überprüft. Anschließend werden 16,40 g Isocyanatopropyltrimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 16,7 g 3-(2-Aminoethyl)-aminopropyltrimethoxysilan, 85,0 g einer hydrophilen pyrogenen Kieselsäure versetzt und innerhalb 0,5 h zu einer standfesten Paste verarbeitet. Letztlich werden 0,25 g Dibutylzinndilaurat als Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Die Kennwerte diese Produkts sind in Tabelle 1 zusammengestellt.

### Beispiel 2:

500 g α,ω-Dihydroxypolydimethylsiloxan mit einem mittleren Molekulargewicht von 45 000 g/mol werden in einem beheizbaren mit Vakuumpumpe versehenen Laborplanetenmischer auf 80 °C erwärmt und 0,5 h im Vakuum. Bei 80 °C werden 3,07 g N-((3-Aminopropyl)-dimethylsilyl)-2,2-dimethyl-1-aza-2-silacyclopentan zugegeben und unter kräftiger Rührung (Butterfly-Rührwerkzeuge, 300 min⁻¹) innerhalb von 1,0 h umgesetzt. Mittels ¹H-NMR wird die Umsetzung des N-((3-Aminopropyl)-dimethylsilyl)-2,2-dimethyl-1-aza-2-silacyclopentan überprüft. Anschließend werden 5,47 g Isocyanatopropyltrimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 16,7 g 3-(2-Aminoethyl)-aminopropyltrimethoxysilan, 85,0 g einer hydrophilen pyrogenen Kieselsäure versetzt und innerhalb 0,5 h zu einer standfesten Paste verarbeitet. Letztlich werden 0,25 g Dibutylzinndilaurat als Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Die Kennwerte diese Produkts sind in Tabelle 1 zusammengestellt.

### Beispiel 3:

500 g α,ω-Dihydroxypolydimethylsiloxan mit einem mittleren Molekulargewicht von 65 000 g/mol werden in einem beheizbaren mit Vakuumpumpe versehenen Laborplanetenmischer auf 80 °C erwärmt und 0,5 h im Vakuum aufgeheizt. Bei 80 °C werden 2,12 g N-((3-Aminopropyl)-dimethylsilyl)-2,2-dimethyl-1-aza-2-silacyclopentan zugegeben und unter kräftiger Rührung (Butterfly-Rührwerkzeuge, 300 min⁻¹) innerhalb von 1,0 h umgesetzt. Mittels ¹H-NMR wird die Umsetzung des N-((3-Aminopropyl)-dimethylsilyl)-2,2-dimethyl-1-aza-2-silacyclopentan überprüft. Anschließend werden 3,78 g Isocyanatopropyltrimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 16,7 g 3-(2-Aminoethyl)-aminopropyltrimethoxysilan, 85,0 g einer hydrophilen pyrogenen Kieselsäure versetzt und innerhalb 0,5 h zu einer standfesten Paste verarbeitet. Letztlich werden 0,25 g Dibutylzinndilaurat als Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Die Kennwerte diese Produkts sind in Tabelle 1 zusammengestellt.

### Beispiel 4:

500 g α,ω-Dihydroxypolydimethylsiloxan mit einem mittleren Molekulargewicht von 80 000 g/mol werden in einem beheizbaren mit Vakuumpumpe versehenen Laborplanetenmischer auf 80 °C erwärmt und 0,5 h im Vakuum aufgeheizt. Bei 80 °C werden 1,73 g N-((3-Aminopropyl)-dimethylsilyl)-2,2-dimethyl-1-aza-2-silacyclopentan zugegeben und unter kräftiger Rührung (Butterfly-Rührwerkzeuge, 300 min⁻¹) innerhalb von 1,0 h umgesetzt. Mittels ¹H-NMR wird die Umsetzung des N-((3-Aminopropyl)-dimethylsilyl)-2,2-dimethyl-1-aza-2-silacyclopentan überprüft. Anschließend werden 3,07 g Isocyanatopropyltrimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 16,7 g 3-(2-Aminoethyl)-aminopropyltrimethoxysilan, 85,0 g einer hydrophilen pyrogenen Kieselsäure versetzt und innerhalb 0,5 h zu einer standfesten Paste verarbeitet. Letztlich werden 0,25 g Dibutylzinndilaurat als Katalysator 10 min. eingemischt.

Die Paste wird mit einer Schichtdicke von 2 mm auf einer Teflonplatte aufgerakelt und unter Einwirkung der Luftfeuchtigkeit zu einem Silicongummi vernetzt. Die Kennwerte diese Produkts sind in Tabelle 1 zusammengestellt.

### Vergleichsbeispiel 5:

In einem ein Liter Dreihalskolben werden unter Stickstoffschutz 492,2 g Octamethyltetracyclosiloxan mit 7,8 g Bis-Aminopropyltetramethyldisiloxan und 300 ppm Tetrabutylphosphoniumhydroxid versetzt, auf 120 °C aufgeheizt und 10 h gerührt. Nach der Umsetzung wird das Produkt auf 170 °C aufgeheizt und 30 min. der Katalysator desaktiviert. Man erhält ein farbloses bis leicht gelbliches Polymer mit einem mittleren Molekulargewicht von 15 000. Anschließend werden 5,47 g Isocyanatopropyltrimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 16,7 g 3-(2-Aminoethyl)-aminopropyltrimethoxysilan, 85,0 g einer hydrophilen pyrogenen Kieselsäure versetzt und innerhalb 0,5 h zu einer standfesten Paste verarbeitet. Letztlich werden 0,25 g Dibutylzinndilaurat als Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Die Kennwerte diese Produkts sind in Tabelle 1 zusammengestellt.

**Tabelle 1:**

| **Eigenschaften der RTV-1-Siliconkautschuk-Mischungen nach Beispiel 1 - 5.** | | | | | |
|---|---|---|---|---|---|
| **Kennwert** | **Bsp. 1** | **Bsp. 2** | **Bsp. 3** | **Bsp. 4** | **Bsp. 5*** |
| **Eigenschaften des silanterminierten Polydiorganosiloxans** | | | | | |
| Viskosität [Pas] | 2,0 | 35 | 60 | 84 | 1,2 |
| Farbe | Farblos, leicht trüb | Farblos, klar | Farblos, klar | Farblos, klar | Leicht gelblich, trüb |
| Geruch | Geruchlos | Geruchlos | Geruchlos | Geruchlos | Stark aminartig |

| **Eigenschaften des gehärteten Siliconkautschuks (14 d, Raumluft)** | | | | | |
|---|---|---|---|---|---|
| Hautbildung [min] | 16 | 17 | 19 | 15 | 20 |
| Zugfestigkeit [Mpas], DIN 53504 | 1,21 | 1,49 | 1,55 | 1,72 | 0,96 |
| Reißdehnung [%], DIN 53504 | 335 | 396 | 497 | 560 | 229 |
| Spannung bei 100% Dehnung [MPas], DIN 53504 | 0,36 | 0,48 | 0,44 | 0,38 | 0,42 |
| Härte [Shore-A], DIN 53505 | 20 | 18 | 16 | 17 | 22 |
| nicht erfindungsgemäß | | | | | |

## Patentansprüche

1. Verfahren zur Herstellung von unter Abspaltung von Alkoholen aus Alkoxysilylendgruppen zu Elastomeren vernetzbare Massen, bei welchem Polydiorganosiloxan (A) der allgemeinen Formel (3) 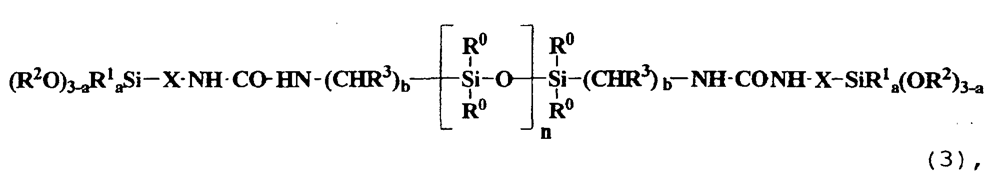 eingesetzt wird, wobei das Polydiorganosiloxan (A) durch Umsetzung eines Polydiorganosiloxans der allgemeinen Formel (4), 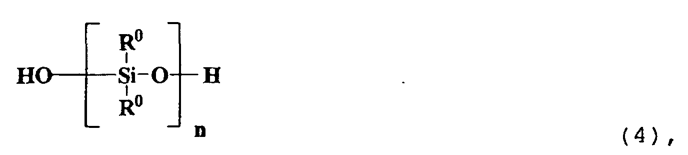 mit einem Silazan der allgemeinen Formel (5), 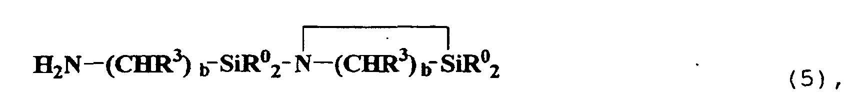 und einem Silan der allgemeinen Formel (6),
**OCN-X-SiR**^{**1**} _{**a**}**(OR**^{**2**}**)**_{**3-a**} (6),
hergestellt wird, worin
**R**⁰ einen einwertigen, gegebenenfalls mit Fluor-, Chlor-, Brom-, C₁-C₄-Alkoxyalkyl- oder Cyanogruppen substituierten C₁-C₂₀-Kohlenwasserstoffrest,
**R**¹, **R**² einen einwertigen, gegebenenfalls mit Fluor-, Chlor-, Brom- oder Cyanogruppen substituierten C₁-C₆- Alkylrest,
**R**³ Wasserstoff oder einen einwertigen, gegebenenfalls mit Fluor-, Chlor-, Brom-, C₁-C₄-Alkoxyalkyl- oder Cyanogruppen substituierten C₁-C₂₀-Kohlenwasserstoffrest oder Acylrest,
**X** eine gegebenenfalls mit Fluor-, Chlor-, Brom-, C₁-C₄-Alkoxyalkyl- oder Cyanogruppen substituierte Alkylengruppe mit 1-10 Kohlenstoffatomen, die durch Ether-, Ester- oder Amin-Gruppen unterbrochen sein kann,
**a** die Werte 0, 1 oder 2,
**b** ganzzahlige Werte von 3 bis 15 und
**n** ganzzahlige Werte von 10 bis 10⁴ bedeuten.

2. Verfahren nach Anspruch 1, bei denen das
Polydiorganosiloxan (A) in zwei Schritten hergestellt wird, wobei im ersten Schritt das Polydiorganosiloxan der allgemeinen Formel (4) mit dem Silazan der allgemeinen Formel (5) zu Aminoalkylpolydiorganosiloxan der allgemeinen Formel (9)
**H**_{**2**}**N-(CHR**^{**3**}**)**_{**b**}**-[SiR**^{**0**} _{**2**}**O]**_{**n**}**SiR**^{**0**} _{**2**}**-(CHR**^{**3**}**)**_{**b**}**-NH**_{**2**} (9),
umgesetzt wird, und im zweiten Schritt das Aminoalkylpolydiorganosiloxan der allgemeinen Formel (9) mit Isocyanatosilan der allgemeinen Formel (6) zum Polydiorganosiloxan der allgemeinen Formel (3) umgesetzt wird.

3. Verfahren nach Anspruch 1 oder 2, bei denen als Silazan der allgemeinen Formel (5) N-((3-Aminopropyl)-dimethylsilyl)-2,2-dimethyl-1-aza-2-silacyclopentan eingesetzt wird.

4. Verfahren nach Anspruch 1 bis 3, bei denen Silan der allgemeinen Formel (6) eingesetzt wird, bei der **X** die Bedeutung Methylen oder Propylen aufweist.

5. Verfahren nach Anspruch 1 bis 4, bei denen Polydiorganosiloxan der allgemeinen Formel (4) eingesetzt wird bei welchem **R**⁰ die Bedeutung Methyl aufweist.

6. Verfahren nach Anspruch 1 bis 5, bei dem den Massen Vernetzungskatalysatoren (B) zugesetzt werden, die ausgewählt werden aus organischen Zinn- und Titanverbindungen.

## Claims

1. Process for preparing compositions which can be crosslinked to give elastomers with elimination of alcohols from alkoxysilyl end groups, which uses polydiorganosiloxane (A) of the general formula (3) 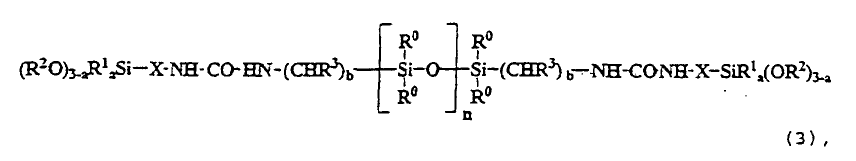 is used, where the polydiorganosiloxane (A) is prepared via reaction of a polydiorganosiloxane of the general formula (4) 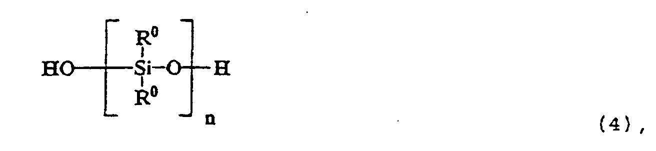 with a silazane of the general formula (5), 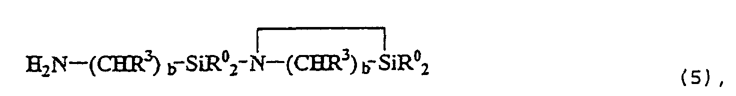 and with a silane of the general formula (6)
**OCN-R-SiR**^{**1**} _{**a**}**(OR**^{**2**}**)**_{**3-a**} (6),
where
**R**⁰ is a monovalent C₁-C₂₀-hydrocarbon radical, unsubstituted or with substitution by fluorine groups, by chlorine groups, by bromine groups, by C₁-C₄-alkoxyalkyl groups, or by cyano groups,
**R**¹, **R**² are a monovalent C₁-C₆-alkyl radical, unsubstituted or substituted by fluorine groups, by chlorine groups, by bromine groups, or by cyano groups,
**R**³ is hydrogen or an acyl radical or a monovalent C₁-C₂₀-hydrocarbon radical, unsubstituted or substituted by fluorine groups, by chlorine groups, by bromine groups, by C₁-C₄-alkoxyalkyl groups, or by cyano groups,
X is an alkylene group, unsubstituted or substituted by fluorine groups, by chlorine groups, by bromine groups, by C₁-C₄-alkoxyalkyl groups, or by cyano groups, and having from 1 to 10 carbon atoms, which may have interruption by ether groups, by ester groups, or by amine groups,
**a** is the value 0, 1, or 2,
**b** is a whole-numbered value from 3 to 15, and
**n** is a whole-numbered value from 10 to 10⁴.

2. Process according to Claim 1, in which the polydiorganosiloxane (A) is prepared in two steps, where in the first step the polydiorganosiloxane of the general formula (4) is reacted with the silazane of the general formula (5) to give aminoalkylpolydiorganosiloxane of the general formula (9)
**H**_{**2**}**N-(CHR**^{**3**}**)**_{**b**}**- [SiR**^{**0**} _{**2**}**O]**_{**n**}**SiR**^{**0**} _{**2**}**-(CHR**^{**3**}**)**_{**b**}**-NH**_{**2**} (9),
and in the second step the aminoalkylpolydiorganosiloxane of the general formula (9) is reacted with isocyanatosilane of the general formula (6) to give the polydiorganosiloxane of the general formula (3).

3. Process according to Claim 1 or 2, in which N-((3-aminopropyl)dimethylsilyl)-2,2-dimethyl-1-aza-2-silacyclopentane is used as silazane of the general formula (5).

4. Process according to any of Claims 1 to 3, in which use is made of the silane of the general formula (6) in which **X** is methylene or propylene.

5. Process according to any of Claims 1 to 4, in which use is made of polydiorganosiloxane of the general formula (4) in which **R**^{**0**} is methyl.

6. Process according to any of Claims 1 to 5, in which crosslinking catalysts (B) which are selected from the organic compounds of tin and of titanium are added to the compositions.

## Revendications

1. Procédé pour la préparation de masses réticulables en élastomères avec dissociation d'alcools de groupements terminaux alcoxysilyle, dans lequel on utilise un polydiorganosiloxane (A) de formule générale (3) 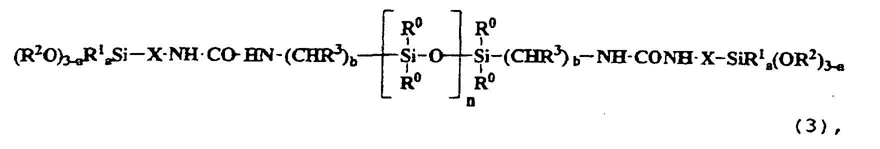 le polydiorganosiloxane (A) étant préparé par transformation d'un polydiorganosiloxane de formule générale (4) 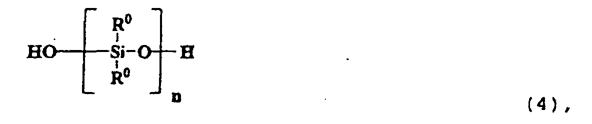 avec un silazane de formule générale (5) 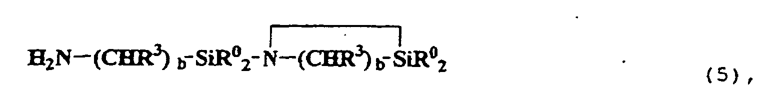 et un silane de formule générale (6),
**OCN-X-SiR**^{**1**} _{**a**}**(OR**^{**2**}**)**_{**3-a**} (6),
dans lesquelles
R⁰ signifie un radical hydrocarboné en C₁ à C₂₀, monovalent, le cas échéant substitué par des groupes fluor, chlore, brome, alcoxyalkyle en C₁ à C₄ ou cyano,
R¹, R² signifient un radical alkyle en C₁ à C₆, monovalent, le cas échéant substitué par des groupes fluor, chlore, brome ou cyano,
R³ signifie hydrogène ou un radical hydrocarboné en C₁ à C₂₀ ou un groupe acyle, monovalent, le cas échéant substitué par des groupes fluor, chlore, brome, alcoxyalkyle en C₁ à C₄ ou cyano,
X signifie un groupe alkylène comprenant 1 à 10 atomes de carbone, le cas échéant substitué par des groupes fluor, chlore, brome, alcoxyalkyle en C₁ à C₄ ou cyano, qui peut être interrompu par des groupes éther, ester ou amino,
a signifie les valeurs 0, 1 ou 2,
b signifie des valeurs entières de 3 à 15 et
n signifie des valeurs entières de 10 à 10⁴.

2. Procédé selon la revendication 1, dans lequel le polydiorganosiloxane (A) est préparé en deux étapes, où, dans la première étape, le polydiorganosiloxane de formule générale (4) est transformé avec le silazane de formule générale (5) en aminoalkylpolydiorganosiloxane de formule générale (9)
H₂N-(CHR³)_{b}-[SiR⁰ ₂O]ₙSiR⁰ ₂-(CHR³)_{b}-NH₂ (9),
et, dans la deuxième étape, on transforme l'aminoalkylpolydiorganosiloxane de formule générale (9) avec l'isocyanatosilane de formule générale (6) en polydiorganosiloxane de formule générale (3).

3. Procédé selon la revendication 1 ou 2, dans lequel on utilise comme silazane de formule générale (5) le N-((3-aminopropyl)diméthylsilyl)-2,2-diméthyl-1-aza-2-silacyclopentane.

4. Procédé selon la revendication 1 à 3, dans lequel on utilise un silane de formule générale (6) dans lequel X signifie méthylène ou propylène.

5. Procédé selon la revendication 1 à 4, dans lequel on utilise un polydiorganosiloxane de formule générale (4) dans lequel R⁰ signifie méthyle.

6. Procédé selon la revendication 1 à 5, dans lequel on ajoute aux masses des catalyseurs de réticulation (B) qui sont choisis parmi les composés organiques de l'étain et du titane.
